# EUROPEAN PATENT APPLICATION

(11) **EP 2 871 745 A1**
(43) Date of publication of application: **13.05.2015**
(21) Application number: 14275228.6
(22) Date of filing: 10.11.2014
(51) Int. Cl.: H02J 5/00

(54) **Wireless power transmitting apparatus and wireless power transmitting-receiving apparatus**

(30) Priority: 11.11.2013 KR 20130136575; 07.04.2014 KR 20140041085
(71) Applicant: Samsung Electro-Mechanics Co., Ltd., Suwon-Si, Gyeonggi-Do (KR)
(72) Inventor: Park,, Seung Won, Gyeonggi-Do (KR); Cho,, Jae Hyoung, Gyeonggi-Do (KR); Park,, Yong Woon, Gyeonggi-Do (KR); Lee,, Sang Beom, Gyeonggi-Do (KR)
(74) Representative: Potter Clarkson LLP

(57) **Abstract**

A wireless power transmitting apparatus(100) may include a power transmitting coil (110) wirelessly transmitting power to an exterior thereof according to controlling, a power transmission controlling unit (123) controlling the power transmitted through the power transmitting coil (110), and a protection unit (130) blocking power induced through the power transmitting coil (110) from the exterior thereof.

## Description

### CROSS-REFERENCE TO RELATED APPLICATION

This application claims the benefit of Korean Patent Application Nos. 10-2013-0136575 filed on November 11, 2013, and 10-2014-0041085 filed on April 7, 2014, with the Korean Intellectual Property Office, the disclosure of which is incorporated herein by reference.

### BACKGROUND

The present disclosure relates to a wireless power transmitting apparatus for wirelessly transmitting power and a wireless power transmitting-receiving apparatus.

In accordance with recent developments in the area of mobile devices such as wearable devices, for example, smart watches and the like, wireless mousee, Bluetooth headsets, and the like, as well as smartphones, many products have been released. Since these products consume about 10 to 25% of the power of the latest smartphones, demand for a simple charging scheme for devices, while such devices are moving, has also increased.

The following related art document discloses a technology of supplying power to a charger embedded in an electronic device in a non-contact type scheme by a magnetic induction effect or a magnetic resonance effect.

Such a non-contact type wireless power transmitting apparatus determines whether an apparatus to receive power therefrom is present in the vicinity thereof and transmits power thereto for a predetermined period to wake-up a communications circuit of the apparatus.

However, in the case of such a current wireless power transmitting apparatus having the configuration as above, for example, when one wireless power transmitting apparatus and another wireless power transmitting apparatus are in the vicinity of each other, the power may be induced to at least one of the two wireless power transmitting apparatuses adjacent to each other. As a result, unexpected voltage stress may be applied thereto to cause damages to an internal circuit configuration of a wireless power transmitting apparatus, thereby causing a situation in which wireless power transmissions are disabled.

### [Related Art Document]

Korean Patent Laid-Open Publication No. 2013-0054897

### SUMMARY

An aspect of the present disclosure may provide a wireless power transmitting apparatus and a wireless power transmitting-receiving apparatus which have a protection function.

According to an aspect of the present disclosure, a wireless power transmitting apparatus may include: a power transmitting coil wirelessly transmitting power to an exterior thereof according to controlling; a power transmission controlling unit controlling the power transmitted through the power transmitting coil; and a protection unit blocking or bypassing power induced through the power transmitting coil from the exterior thereof. According to another aspect of the present disclosure, a wireless power transmitting-receiving apparatus may include: a wireless power receiving unit wirelessly receiving power from an exterior thereof and performing charging; and a wireless power transmitting unit including a power transmitting coil wirelessly transmitting , charged power to an exterior thereof according to controlling, a power transmission controlling unit controlling the power transmitted through the power transmitting coil, and a protection unit protecting the power transmission controlling unit from power induced through the power transmitting coil from the exterior thereof.

The protection unit may protect the power transmission controlling unit from the power induced through the power transmitting coil from the exterior thereof, and the power transmission controlling unit may include: a power conversion unit converting provided power into transmission power having a preset level; a switching unit switching the transmission power from the power conversion unit; and a controlling unit controlling operations of the power conversion unit and the switching unit. The protection unit may protect the power conversion unit from the power induced through the power transmitting coil from the exterior thereof.

The protection unit may be one of an overvoltage breaker, a triode alternating current (AC) switch, a thyristor, a zener diode, a transient voltage suppression (TVS) diode, and a varistor.

The protection unit may include a switch formed on a power transmission line between the power transmission controlling unit and the power transmitting coil, and the power transmission controlling unit may detect a voltage level of the power transmission line and control on/off switching of the switch.

### BRIEF DESCRIPTION OF DRAWINGS

The above and other aspects, features and other advantages of the present disclosure will be more clearly understood from the following detailed description taken in conjunction with the accompanying drawings, in which:
FIG. 1A is a drawing illustrating a case in which a problem occurs in a wireless power transmitting apparatus and FIG. 1B is a graph illustrating a voltage inversely introduced to the wireless power transmitting apparatus;
FIG. 2 is a schematic block diagram of one example of a wireless power transmitting apparatus according to an embodiment in the present disclosure;
FIG. 3 is a schematic block diagram of another example of the wireless power transmitting apparatus according to an embodiment in the present disclosure;
FIGS. 4A, 4B, and 4C are block diagrams schematically illustrating an example of a protection unit which is adopted for the wireless power transmitting apparatus according to an embodiment in the present disclosure;
FIG. 5 is a graph illustrating electrical characteristics of the wireless power transmitting apparatus according to an embodiment in the present disclosure;
FIG. 6A is a schematic exploded perspective view of a mobile device having a wireless power transmitting-receiving apparatus according to an embodiment in the present disclosure and FIG. 6B is a schematic side perspective view of the mobile device having the wireless power transmitting-receiving apparatus according to an embodiment in the present disclosure;
FIGS. 7A through 7C are side perspective views schematically illustrating examples of the wireless power transmitting-receiving apparatus according to an embodiment in the present disclosure; and
FIGS. 8A and 8B are schematic block diagrams of the wireless power transmitting-receiving apparatus according to an embodiment in the present disclosure.

### DETAILED DESCRIPTION

Exemplary embodiments of the present disclosure will now be described in detail with reference to the accompanying drawings.

The disclosure may, however, be exemplified in many different forms and should not be construed as being limited to the specific embodiments set forth herein. Rather, these embodiments are provided so that this disclosure will be thorough and complete, and will fully convey the scope of the disclosure to those skilled in the art.

In the drawings, the shapes and dimensions of elements may be exaggerated for clarity, and the same reference numerals will be used throughout to designate the same or like elements.

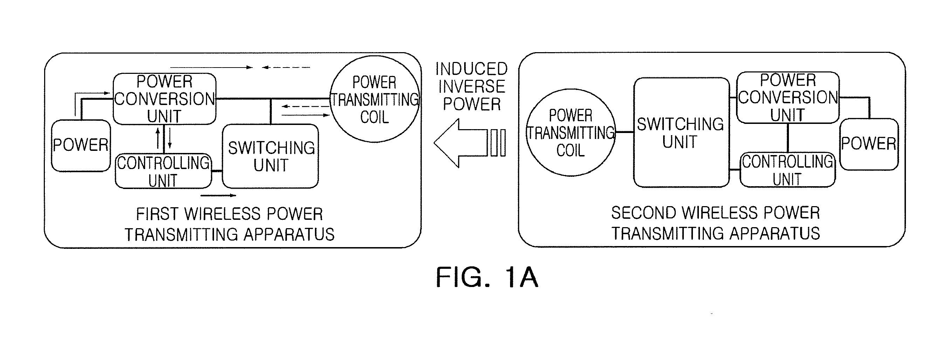

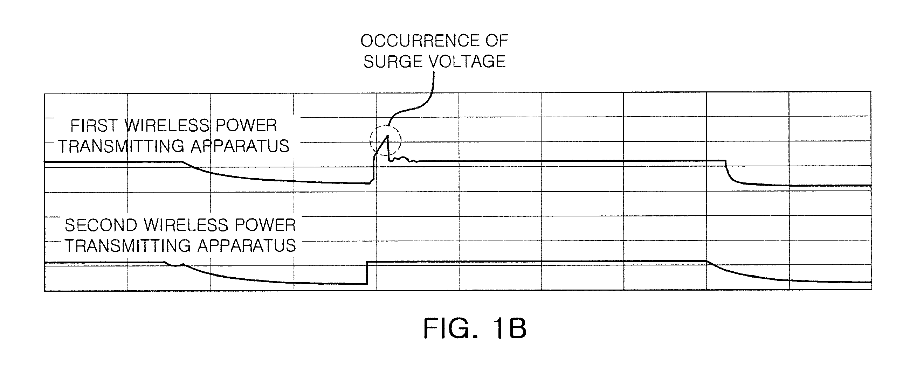

FIG. 1A is a drawing illustrating a case in which a problem occurs in a wireless power transmitting apparatus and FIG. 1B is a graph illustrating an inverse voltage introduced to such a wireless power transmitting apparatus.

As illustrated in FIG. 1A, in the case in which a first wireless power transmitting apparatus and a second wireless power transmitting apparatus are matched with each other, a possibility that power from the second wireless power transmitting apparatus will be introduced into the first wireless power transmitting apparatus may be high. Consequently, as illustrated in FIG. 1B, the power induced into the first wireless power transmitting apparatus may cause a surge voltage and a voltage level of such a surge voltage may exceed an operating voltage range of devices adopted for use with the wireless power transmitting apparatus, thereby causing excessive voltage stress to be applied and even causing a device to be damaged. For example, a surge voltage of 27 V may be instantaneously applied to a device having an operating voltage range of 9 V to 15 V, thereby causing insulation breakdown and damage to devices.

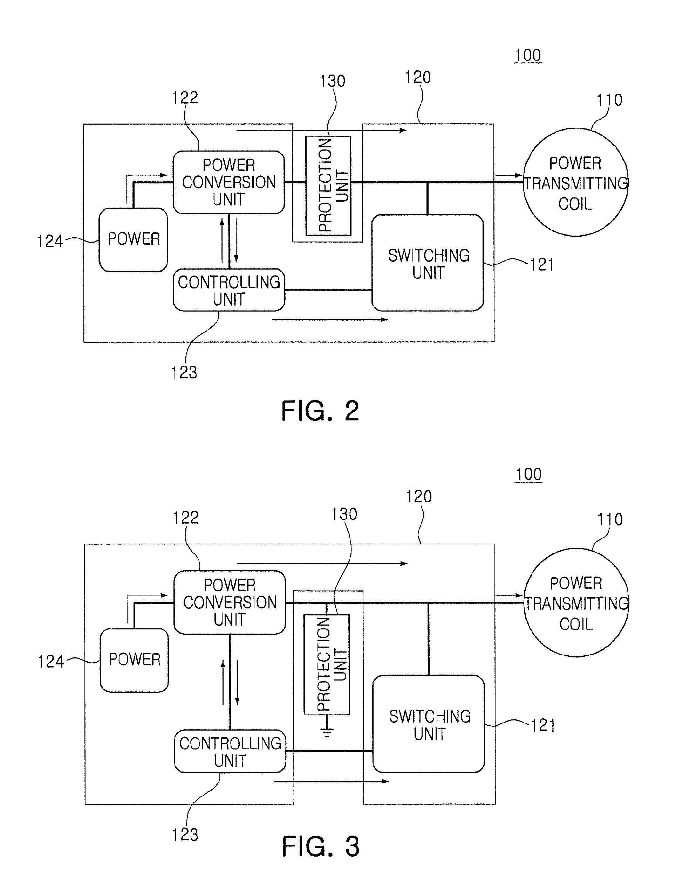

FIG. 2 is a schematic block diagram of an example of a wireless power transmitting apparatus according to an embodiment in the present disclosure.

In order to solve the problem as illustrated in FIG. 1B, referring to FIG. 2, a wireless power transmitting apparatus 100 according to an embodiment in the present disclosure may include a power transmitting coil 110, a power transmission controlling unit 120, and a protection unit 130.

The power transmitting coil 110 may wirelessly transmit power to an exterior thereof according to controlling by the power transmission controlling unit 120. Since the power transmitting coil 110 has a structure in which it may transmit power to the exterior thereof, while power may also be received from the exterior thereof, the aforementioned problem may occur.

The power transmission controlling unit 120 may control the power transmitting coil 110 so that supplied power may be converted into transmission power and the power may be wirelessly transmitted to the exterior through the power transmitting coil 110.

To this end, the power transmission controlling unit 120 may include a switching unit 121 capable of switching power flowing in the power transmitting coil 110, a power conversion unit 122 converting the supplied power into transmission power having a preset level and providing it to the power transmitting coil 110, and a controlling unit 123 controlling operations of the switching unit 121 and the power conversion unit 122. Here, the supplied power may be Alternating Current (AC) power or Direct Current (DC) power, and for example, in the case of the DC power, the DC power may be provided from a battery.

The surge voltage inversely introduced by being induced through the power transmitting coil 110 from the exterior thereof may be applied to the power transmission controlling unit 120, and may also be applied to the power conversion unit 122.

In order to protect the power transmission controlling unit 120 from the surge voltage, the protection unit 130 may be formed between the power transmitting coil 110 and the power conversion unit 122 to thereby block the surge voltage induced into the power transmitting coil 110. Here, the blocking of the surge voltage may refer to blocking the transmission of the induced surge voltage and may refer to suppressing a level of the induced voltage from being increased.

In addition, as illustrated in the schematic block diagram of another example of the wireless power transmitting apparatus according to an embodiment in the present disclosure as illustrated in FIG. 3, the protection unit 130 may bypass the surge voltage induced into the power transmitting coil 110 to a ground.

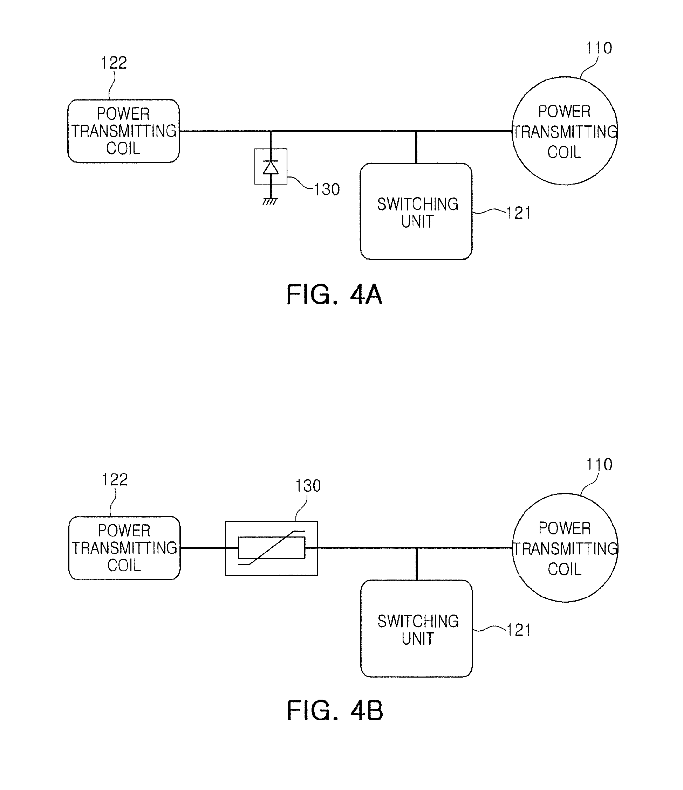

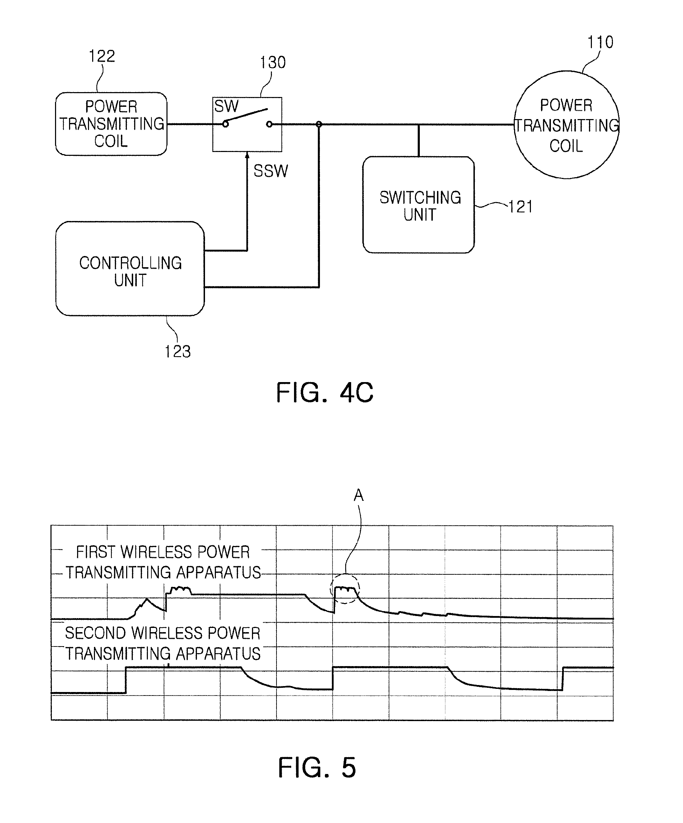

FIGS. 4A, 4B, and 4C are block diagrams schematically illustrating an example of a protection unit adopted for use in the wireless power transmitting apparatus according to an embodiment in the present disclosure.

The protection unit 130 may be disposed between the power transmitting coil 110 and the power conversion unit 122, and the protection unit 130 may be variously configured by an overvoltage breaker, a triode AC switch, a thyristor, a zener diode, a transient voltage suppression (TVS) diode, a varistor, and the like.

Although FIGS. 4A and 4B respectively illustrate examples in which the protection unit 130 is configured by the TVS diode or the varistor, among the elements described above, the protection unit 130 may also be configured by elements not mentioned herein, except for the TVS diode or the varistor among the above mentioned elements.

In addition, referring to FIG. 4C, the protection unit 130 may be configured by a switch SW disposed on a power transmission line between the power conversion unit 122 of the power transmission controlling unit and the power transmitting coil 110, and the controlling unit 123 of the power transmission controlling unit may detect a voltage level in the power transmission line between the switch SW and the power transmitting coil 110 and provide a control signal SSW controlling on/off switching of the switch SW.

FIG. 5 is a graph illustrating electrical characteristics of the wireless power transmitting apparatus according to an embodiment in the present disclosure.

Referring to FIG. 5, in the wireless power transmitting apparatus according to an embodiment in the present disclosure, it may be confirmed that the voltage level of the surge voltage induced through the power transmitting coil 110 is reduced by the adopted protection unit 130, as illustrated in FIG. 5, and when comparing FIG. 5 with the graph illustrated FIG. 1B, it may be appreciated that technical effect of the present disclosure is excellent.

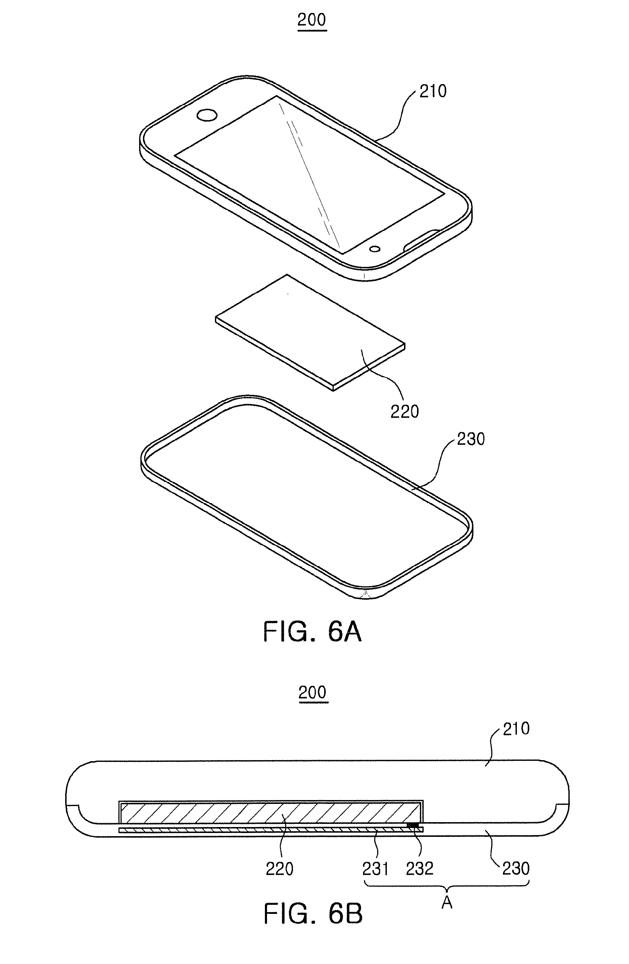

FIG. 6A is a schematic exploded perspective view of a mobile device having a wireless power transmitting-receiving apparatus according to an embodiment in the present disclosure and FIG. 6B is a schematic side perspective view of the mobile device having the wireless power transmitting-receiving apparatus according to an embodiment in the present disclosure.

A mobile device 200 according to an embodiment in the present disclosure may be one of various mobile communications devices such as a mobile communications terminal, a smartphone, a personal digital assistant (PDA), and the like, and may be one of various mobile electronic devices such as an MP3 player, a portable multimedia player (PMP), and the like.

A mobile device body 210 may perform a preset electrical operation and may require driving power to perform the preset electrical operation.

To this end, the mobile device body 210 may be provided with a accommodation portion and the accommodation portion may store a battery 220.

The battery 220 may be accommodated in the mobile device body 210 and provide charged DC power to the mobile device body 210 to thereby enable the mobile device body 210 to perform the set operation.

To this end, the battery 220 may be charged with power, and examples of methods of charging the battery 220 with power may include a method of charging battery 220 in a wired scheme by inserting a power plug into the mobile device body 210 and a method of wirelessly supplying power to the battery 220 from the exterior thereof.

A wireless power transmitting-receiving apparatus A may be adopted to wirelessly charge the battery 220, and a body 230 of the wireless power transmitting-receiving apparatus A may be coupled to the mobile device body 210. The body 230 of the wireless power transmitting-receiving apparatus A may be a case cover 230 opening or closing the accommodation portion in which the battery 220 of the mobile device body 210 is accommodated.

The case cover 230 may have the accommodation portion provided therein, the accommodation portion may have a power transmitting or receiving module 231 accommodated therein, and for example, when the power transmitting or receiving module 231 wirelessly receives power from the exterior, the power transmitting or receiving module 231 may charge the battery 220 with power through a terminal 232.

On the other hand, the wireless power transmitting-receiving apparatus A according to an embodiment in the present disclosure may charge the battery 220 with power in a preset wireless scheme and may wirelessly transmit the power charged in the battery 220 to the exterior thereof. To this end, the power transmitting or receiving module 231 may receive the power charged in the battery 220 through the terminal 232 and wirelessly transmit the power to the exterior thereof.

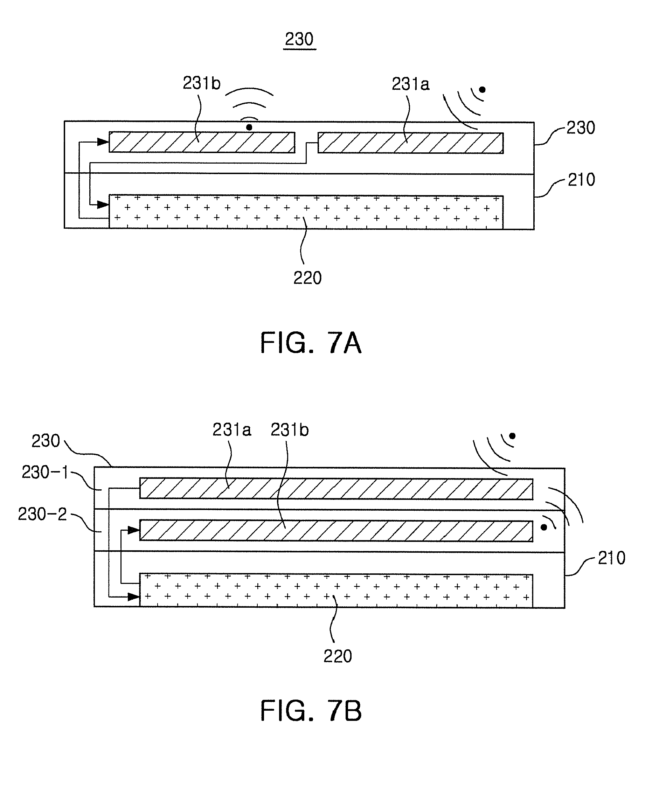

FIGS. 7A through 7C are side perspective views schematically illustrating examples of a wireless power transmitting-receiving apparatus according to an embodiment in the present disclosure.

Referring to FIG. 7A, a case cover 230 may have a power transmitting module 231b and a power receiving module 231a accommodated therein, and the mobile device body 210 may be provided with the accommodation portion for accommodating the battery 220.

Although the drawings illustrates a case in which a thickness of the case cover 230 is thicker than that of the mobile device body 210, this merely illustrates an extreme case in which the thickness of the case cover 230 is relatively thick for convenience of explanation, and the thickness of the case cover 230 included in the wireless power transmitting-receiving apparatus according to an embodiment in the present disclosure may not have a substantial difference from a thickness of a general case cover coupled to a rear surface of the mobile device body 210 and is not limited to the embodiments thereof illustrated in the drawings.

The battery 220 may supply the charged power to the power transmitting module 231b and the battery 220 may also receive the power wirelessly received from the power receiving module 231a and may be charged with the power.

The case cover 230 may be provided with at least one accommodation portion for accommodating the power transmitting module 231b and the power receiving module 231a, and may be provided with a first receiving part 230-1 and a second receiving part 230-2, as illustrated in FIG. 7B, such that the power receiving module 231a or the power transmitting module 231b may be accommodated respectively in the first receiving part 230-1 and the second receiving part 230-2.

On the other hand, referring to FIG. 7A, the power receiving module 231a may include a power receiving coil 231a-1 which wirelessly receives power and a power reception controlling unit 231a-2 which controls the wireless power reception, and the power transmitting module 231b may include a power transmission controlling unit 231b-1 controlling the wireless power transmission and a power transmitting coil 231b-2 which wirelessly transmits power.

In addition, the wireless power transmitting-receiving apparatus according to an embodiment in the present disclosure may further include a controlling unit 233, and the controlling unit 233 may control operations of the power receiving module 231a and the power transmitting module 231b depending on power state information of the battery, and in further detail, may selectively control the operations of the power receiving module 231a and the power transmitting module 231b depending on a power level of the battery.

In addition, the controlling unit 233 may control the battery to be charged with power from an exterior device such as an adaptor in the wired scheme and may perform a control so that power charged in the battery, having been wired-charged, may be wirelessly transmitted to the exterior thereof through the power transmitting module 231b.

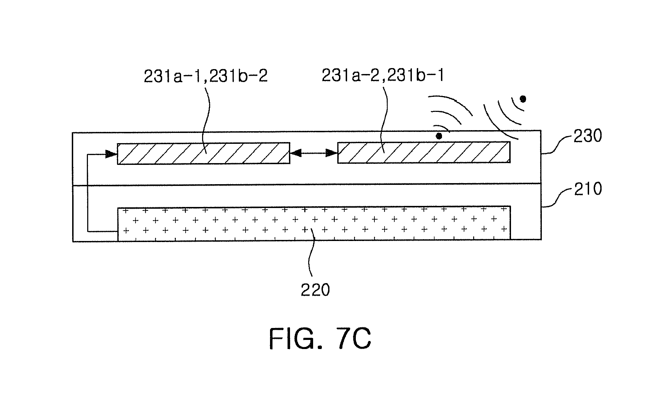

As illustrated in FIG. 7C, the power reception controlling unit 231a-2 and the power transmission controlling unit 231b-1 may be configured as a single module for controlling both power transmission and power reception, and the power receiving coil 231a-1 and the power transmitting coil 231b-2 may be configured as a single coil to be used for both transmitting and receiving power.

The power reception controlling unit 231a-2 and the power transmission controlling unit 231b-1 may perform controlling so that the power is wirelessly transmitted or received in a magnetic resonance scheme or a magnetic induction scheme.

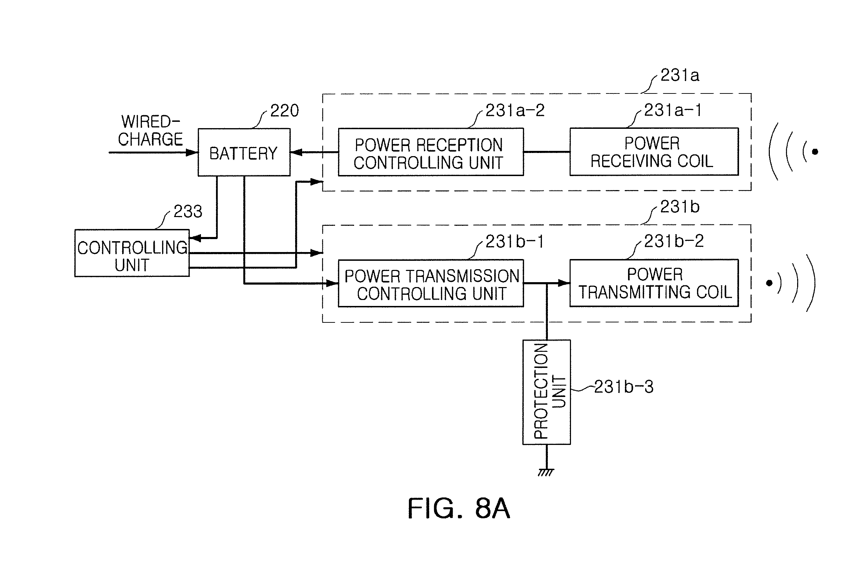

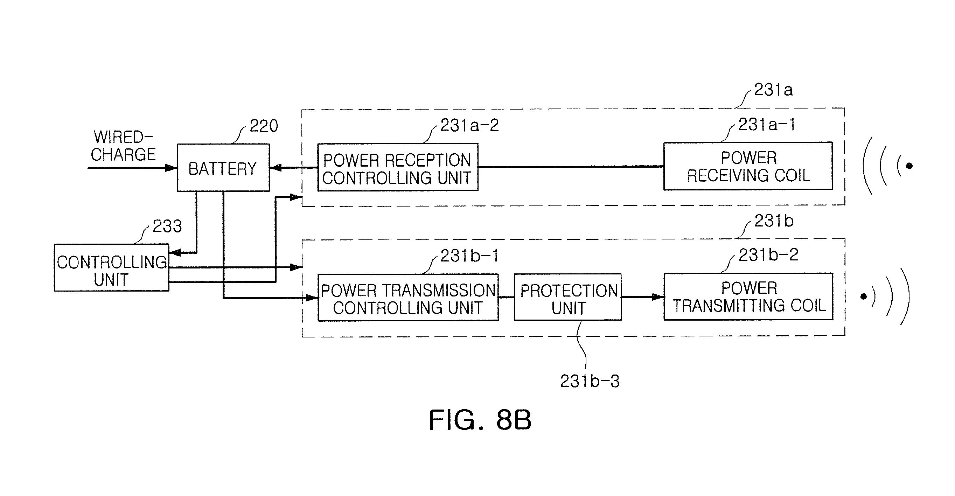

FIGS. 8A and 8B are schematic block diagrams of the wireless power transmitting-receiving apparatus according to an embodiment in the present disclosure.

Referring to FIGS. 8A and 8B, the wireless power transmitting-receiving apparatus according to an embodiment in the present disclosure may have a protection unit 231b-3 formed between the power transmitting coil 231b-2 and the power transmission controlling unit 231b-1, and the power transmission controlling unit 231b-1 may have the same function and configuration as the figures illustrated in FIGS. 2 and 3 and the description thereof.

In addition, the protection unit 231b-3 may also have the same function and configuration as the figures illustrated in FIGS. 2, 3, 4A, and 4B and the description thereof.

As set forth above, according to embodiments in the present disclosure, the wireless power transmitting apparatus may be protected from the unexpected voltage stress which may occur by power induced from one side wireless power transmitting apparatus to the other side wireless power transmitting apparatus when the wireless power transmitting apparatuses are matched to each other.

While exemplary embodiments have been shown and described above, it will be apparent to those skilled in the art that modifications and variations could be made without departing from the scope of the present invention as defined by the appended claims.

## Claims

1. A wireless power transmitting apparatus comprising:
a power transmitting coil wirelessly transmitting power;
a power transmission controlling unit controlling the power transmitted through the power transmitting coil; and
a protection unit blocking power induced by the power transmitting coil.

2. The wireless power transmitting apparatus of claim 1, wherein the protection unit protects the power transmission controlling unit from the power induced through the power transmitting coil from the exterior thereof.

3. The wireless power transmitting apparatus of claim 1, wherein the power transmission controlling unit comprises:
a power conversion unit converting provided power into transmission power having a preset level;
a switching unit switching the transmission power from the power conversion unit; and
a controlling unit controlling operations of the power conversion unit and the switching unit.

4. The wireless power transmitting apparatus of claim 3, wherein the protection unit protects the power conversion unit from the power induced through the power transmitting coil from the exterior.

5. The wireless power transmitting apparatus of claim 1, wherein the protection unit is one of an overvoltage breaker, a triode alternating current (AC) switch, a thyristor, a zener diode, a transient voltage suppression (TVS) diode, and a varistor.

6. The wireless power transmitting apparatus of claim 1, wherein the protection unit comprises a switch formed on a power transmission line between the power transmission controlling unit and the power transmitting coil, and the power transmission controlling unit detects a voltage level of the power transmission line and controls on/off switching of the switch.

7. A wireless power transmitting apparatus comprising:
a power transmitting coil wirelessly transmitting power;
a power transmission controlling unit controlling the power transmitted through the power transmitting coil; and
a protection unit bypassing power induced by the power transmitting coil.

8. The wireless power transmitting apparatus of claim 7, wherein the protection unit protects the power transmission controlling unit from the power induced through the power transmitting coil from the exterior thereof.

9. The wireless power transmitting apparatus of claim 7, wherein the power transmission controlling unit comprises:
a power conversion unit converting provided power into transmission power having a preset level;
a switching unit switching the transmission power from the power conversion unit; and
a controlling unit controlling operations of the power conversion unit and the switching unit.

10. The wireless power transmitting apparatus of claim 9, wherein the protection unit protects the power conversion unit from the power induced through the power transmitting coil from the exterior thereof.

11. The wireless power transmitting apparatus of claim 7, wherein the protection unit is one of a zener diode, a transient voltage suppression (TVS) diode, and a varistor.

12. A wireless power transmitting-receiving apparatus comprising:
a wireless power receiving unit wirelessly receiving power ; and
a wireless power transmitting unit having a power transmitting coil wirelessly transmitting charged power, a power transmission controlling unit controlling the power transmitted through the power transmitting coil, and a protection unit protecting the power transmission controlling unit from power induced by the power transmitting coil.

13. The wireless power transmitting-receiving apparatus of claim 12, wherein the protection unit protects the power transmission controlling unit by blocking the power induced through the power transmitting coil from the exterior thereof.

14. The wireless power transmitting-receiving apparatus of claim 12, wherein the protection unit protects the power transmission controlling unit by bypassing the power induced through the power transmitting coil from the exterior thereof to a ground.

15. The wireless power transmitting-receiving apparatus of claim 13, wherein the power transmission controlling unit comprises:
a power conversion unit converting provided power into transmission power having a preset level;
a switching unit switching the transmission power from the power conversion unit; and
a controlling unit controlling operations of the power conversion unit and the switching unit.
